# EUROPEAN PATENT SPECIFICATION

(11) **EP 2 067 074 B1**
(45) Date of publication and mention of the grant of the patent: **08.06.2011**
(21) Application number: 07837698.5
(22) Date of filing: 05.09.2007
(51) Int. Cl.: B41M 5/337, B41M 5/46

(54) **COMPOSITION FOR FORMING A LASER-MARKABLE COATING AND A LASER-MARKABLE MATERIAL CONTAINING ORGANIC ABSORPTION ENHANCEMENT ADDITIVES**
ZUSAMMENSETZUNG ZUR FORMUNG EINER LASERMARKIERBAREN BESCHICHTUNG UND EINES LASERMARKIERBAREN MATERIALS MIT ORGANISCHEN ABSORPTIONSVERSTÄRKUNGSZUSÄTZEN
COMPOSITIONS DESTINÉES À LA FORMATION D'UN REVÊTEMENT MARQUABLE PAR LASER ET MATÉRIAU MARQUABLE PAR LASER CONTENANT DES ADDITIFS ORGANIQUES FAVORISANT L'ABSORPTION

(30) Priority: 05.09.2006 US 842013 P
(43) Date of publication of application: 10.06.2009
(73) Proprietor: Fujifilm Hunt Chemicals U.S.A., Inc., Allendale, NJ 07401 (US)
(72) Inventor: DUAN, Hailing, Montville, NJ 07045 (US); CARLOCK, Janet M., Wayne, NJ 07470 (US)
(74) Representative: Andersson, Inga-Lill
(86) International application number: PCT/US2007/019299
(87) International publication number: WO 2008/030428

(56) References cited:
- EP-A- 1 323 540
- JP-A- 58 069 095
- US-A- 4 735 879
- US-B1- 6 482 768
- US-B1- 6 697 315

## Description

### BACKGROUND

Individualized and traceable product and package labeling with variable information is becoming increasingly important in many industries, and it is generally beneficial to provide clearly visible, sharp, high contrast marks. Methods are known in the art for non-contacting rapid marking using focused beams of electromagnetic wave of specific wavelengths and intensity, such as laser beams, commonly known as "laser marking". U.S. Patent Nos. 6166210, 5667580, 6855910, 6888095 and International Publication No. WO 2006/052843 A2 disclose various methods and compositions for forming a media for laser marking. For example, in WO 2006/052843 A2, a method and composition are disclosed for forming a laser markable media, which is capable of providing superior mark quality with high contrast, high resolution, and a high degree of quality consistency, and that does not rely on physical damage to the material integrity on the exposed area, such as ablation, charring, or trapping of gaseous bubbles released from chemical decomposition of coating ingredients.

Regardless of the differences in mark formation methods, media sensitization to the irradiation of the laser beam is generally necessary. For some applications, high sensitivity can be especially important for the following reasons: a) a mark can be formed on or through a plastic substrate with lower laser energy dosage, so that the plastic substrate is subjected to minimum risk of damage by the laser power, or b) a large amount of marking needs to be completed at a high speed to enable high production throughput, without relying on a laser of higher power rating, or c) marking needs to be accomplished at a given marking speed with a laser tube of given power rating, but with a lower setting of the actual power output, so that a more consistent and sustainable power output level can easily be maintained.

Laser marking sensitivity may be enhanced either by lowering the responding or mark formation threshold temperature of the media, or by optically sensitizing the media so that a larger amount of the laser energy can be effectively utilized for the mark formation process. However, sensitivity enhancement by lowering the responding threshold temperature usually is accomplished at an increased risk of storage stability of the coated media. In order to minimize compromising storage stability, optical sensitization may be achieved by incorporating laser-absorbing compounds into the coated imaging layer. Many inorganic based laser-absorbing compounds for lasers, including CO₂ wavelength lasers, are known in the art. Some examples of these laser-absorbing compounds can include mica or aluminum oxide compounds. Application of these compounds have been disclosed in US Patent Nos. 5413629, 5608429, 5691757, 5866644, 5928780, 5977514, 6545065, 6727308 and 6924077, in German Patent and Patent Application Nos. 1467468,1959998,2009566, 2214545, 2215191, 2244298, 2312331,2522572,3137808,3137809,3151343,3151354,3151355,3211602, 3235017 and 3842330, as well as in Japanese Patent and Patent Application Nos. 2003183530A and 3391000.

However, these inorganic compounds often have poor solubility in compositions such as coating dispersions. To disperse them evenly into the coating composition, these compounds need to be ground into very fine particles. It is often difficult to achieve a desired particle size. If the particle size is too large, for example above 10 µm, it often causes coating defects or problem of uneven distribution of the sensitizing compounds, especially if the desired coating film thickness is also within this same µm range. This not only leads to visual defects on the coated film, but also results in uneven marks due to unevenness in laser sensitivity. In addition, these inorganic compounds often have densities that are well above that of the coating composition. As a result, incorporating large amounts of such compounds into a liquid coating composition tends to cause settling and caking in the coating dispersion, specially if the coating liquid requires low viscosity for printing, spraying, or other high-speed coating applications.

JP-A-58/069095 relates to a heat-sensitive recording material for use with thermal printers equipped with thermal heads. The heat-sensitive recording material of JP-A-58/069095 comprises a heat-sensitive color-forming layer containing a colorless or pale leuco dye and a phenolic compound reacting with said leuco dye when heated. The heat-sensitive color-forming layer further comprises an organic compound, e.g. polyethylene glycol ether.

EP-A-1 323 540 relates to a thermally color-developing reversibly thermochromic pigment. The thermally color-developing thermochromic pigment comprises (a) an electron-donating chromic organic compound, (b) an electron-accepting compound selected from gallic esters, and (c) a reaction medium, e.g. polyethylene glycol, which reversibly generates color reactions of both of the compounds within a specified temperature range. These three components are contained in microcapsules.

It is therefore desirable to provide organic-based laser absorbing compounds that not only facilitate the mark formation at a lower laser dosing level, but can also easily be dissolved or dispersed with a very fine particle size into a liquid coating composition, providing minimal coating defects on the coated film. Organic-based laser absorbing compounds may also provide better physical stability of a liquid coating composition of low viscosity, and hence minimize settling and caking during long period of storage.

### SUMMARY

The present invention relates to a coating composition as well as a media formed by applying such coating composition onto a substrate for non-contact marking using a focused beam of electromagnetic wave of specific frequencies and intensity to form human-visible marks on said media. The coating composition can comprise at least one organic compound that enhances the sensitivity of the media towards the irradiation of the focused beam of electromagnetic wave of given frequencies, which can in turn enable mark formation on the coated media at a lower energy density.

According to one aspect, a coating composition as defined in claim 1 as well as a coated laser markable medium are defined in claim 8 are provided with increased laser sensitivity with minimal impact on storage stability of both the coating compostion as well as the coated media.

A sensitizing compound is provided that can be incorporated into a liquid coating composition with minimal caking or settling of the coating liquid, even at a high loading in the coating composition.

A laser sensitive coating composition is provided which contains organic compounds that themselves not only contribute to the absorption of laser energy and hence improve the laser sensitivity of coated media, but also provide a dispersion media for color forming agents and other components of the coating composition such as inorganic pigments that are known in the art. Use of these organic compounds can also provide better coating uniformity of the coated film, with minimal coating defects as well as improved uniformity toward sensitivity of laser exposure across the entire coated media.

The above aspect can be obtained by the use of at least one organic compound in a liquid coating composition, which when coated on a media, can enhance the sensitivity of the coated layer towards laser beams of wavelength of from 10.3 µm to 10.6 µm. The organic compound is represented by the following general formula I:

Formula I: R₁(OCH₂CH₂)ₙOR₂

where R₁ and R₂ are independently selected from the group consisting ofH, alkyl, alkenyl, aryl, and substituted or unsubstituted heteroaromatic, and more preferably H or alkyl of 1 to 5 carbons, and n>10. For example, n can be from about 20 to about 1000, or from about 30 to about 500. One or multiple organic compounds represented by the formula I can be used.

The addition amount of the at least one compound represented by formula I is from 1% to 20% w/w as total solid content in the dried coating film or mark formation layer. More preferably, the addition amount can be from about 5% to about 10% w/w as total solid content in the dried coating film or mark formation layer.

The average molecular weight and solubility of the compounds represented by formula I in a coating composition can be determined, for example, by the size and type of the substitution groups, R₁ and R₂, as well as the chain length n. Compounds with high solubility in the solution of the liquid coating composition are preferred. In the case of low solubility compounds, a fine powder form of the organic compound may be selected, preferably a particle-size below about 10 µm is preferred, and more preferably, below about 1 µm. In addition, preferred substitution groups, R₁ and R₂, and the chain length n can be selected based on the application and use of the coating composition; for example, aqueous based coatings or solvent based coatings may benefit from varying organic compounds. Another factor that can be considered in the selection of preferred substitution groups and chain length is the type of color formation agents in the coating composition in order to allow maximum dispersion of these color forming agents in the coating composition. Based on the present disclosure, a person skilled in the art of laser markable coating compositions would be able to determine preferable selections of the substitution groups, R₁ and R₂, as well as the chain length n based on the other components of the coating composition.

In a specific embodiment based on the color forming system disclosed in WO 2006/052843 A2 and WO 2006/063165 A2, an exemplary organic compound represented by formula I has R₁ and R₂ independently selected from the group consisting ofH, alkyl of 1 to 5 carbons, alkenyl of 2 to 5 carbons, and n in the range of from about 20 to about 1000. More preferably the organic compound represented by formula I can have R₁ and R₂ independently selected from the group consisting ofH, alkyl of 1 to 5 carbons and n in the range of from about 30 to about 500.

Compounds selected from formula I and from inorganic based laser sensitizing ingredients disclosed in the prior art may be combined and mixed in the coating composition, to maximize the sensitivity of the coated media, as well as to obtain a highly uniform and stable coating liquid.

### DETAILED DESCRIPTION

For a laser markable coating designed for use with a carbon dioxide (CO₂) laser of from 10.3 to 10.6 µm wavelength the sensitivity enhancement of the inventive organic compounds can benefit coating compositions used in various different color forming systems.

One specific embodiment of the disclosed invention is for forming a laser-markable material in a coating composition system disclosed in WO 2006/052843 A2 and WO 2006/063165 A2, in which the color forming agents comprise an electron acceptor species and electron donor dye precursor particles encapsulated with a polymer having a glass transition temperature, T_{g}, of from about 150°C to about 190°C. A detailed description of the embodiment is disclosed herein, but is not limited to this particular embodiment. Other color forming system known in the art may be applied to the use of the inventive organic compound sensitizing agents the same into other color forming systems.

### A. Composition of the mark formation layer

The composition of the mark formation layer can comprise the following elements: an electron donor dye precursor preferably micro-encapsulated within a polymer of specific T_{g} range, an electron acceptor compound which can react with the electron donor dye precursor to turn it into a dye with an absorption peak in the wavelength range of visible spectrum, inert organic compounds that absorb electromagnetic wave in the wavelength range of from 10.3 µm to 10.6 µm, and a polymer dispersion media in which all of the components are dispersed and coated in such a way that they are in close proximity of reaction length from each other.

### Electron donor dye precursor

An electron donor dye precursor that can be preferably used in the present invention is not particularly limited as long as it is substantially colorless, and is preferably a colorless compound that has such a nature that it forms a color by donating an electron or by accepting a proton from an acid. A particularly preferred structural feature in the backbone of the electron donor dye precursor includes a ring structure which is subjected to ring opening reaction or cleavage in the case where it is in contact with an electron accepting compound. Typical examples of such structural feature are a lactone, a lactam, a saltone, or a spiropyran, among others. More detailed description and examples of preferred electron donor dye precursor and preferable embodiments are disclosed in WO 2006/052843 A2.

### Micro-encapsulation

It is preferred that the electron donor dye precursor in the composition of the present invention be used after being formed into a microcapsule, preferably via a surface polymerization process. For example, the surface polymerization process can be employed such that the electron donor dye precursor for forming a core of the microcapsules is dissolved or dispersed in a hydrophobic organic solvent to prepare an oily phase. The oily phase can then be mixed with an aqueous phase obtained by, for example, dissolving a water-soluble polymer in water, and can then be subjected to emulsification and dispersion by using, for example, a homogenizer. This can be followed by heating, so as to conduct a polymer-forming reaction at the interface of the oily droplets, whereby a microcapsule wall of a polymer substance can be formed. More detailed description and exemplary embodiments are disclosed in WO 2006/052843 A2.

### Electron acceptor developer dispersion

The electron acceptor developer compound, which reacts with the electron donor dye precursor, may be used singly or in a combination of two or more. The coating composition can be combined with a Dispersion containing the electron acceptor developer compound. Examples of electron acceptor developer compounds are disclosed in WO 2006/052843 A2.

The electron acceptor compound may be used as a solid dispersion prepared in a sand mill with water-soluble polymers, organic bases, and other color formation aids or may be used as an emulsion dispersion by dissolution in a high boiling point organic solvent that is only slightly water-soluble or is water-insoluble, mixing with a polymer aqueous solution (aqueous phase) containing a surface-active agent and/or a water-soluble polymer as a protective colloid, followed by emulsification, for example, by a homogenizer. In this case, a low boiling point solvent may be used as a dissolving assistant depending on necessity. More detailed description and exemplary embodiments are disclosed in WO 2006/052843 A2.

### Organic laser absorption enhancement additives

Laser absorption sensitivity enhancement additives of this invention are selected based on the type of laser used and its emitting wavelength. For a CO₂ laser, the typical emitting wavelength of commercially available laser marking equipment is about 10.6 µm. The selected organic laser marking sensitivity enhancement compounds of this invention for 10.6 µm CO₂ lasers are represented by the following general formula I:

Formula I: R₁(OCH₂CH₂)ₙOR₂

where R₁ and R₂ can independently be selected from the group consisting ofH, alkyl, alkenyl, aryl and substituted or unsubstituted heteroaromatic, and n>10. For example, n can be from about 20 to about 1000, or from about 30 to about 500.

The addition amount of these compounds is from 1% to 20% w/w as total solid content in the dried coating composition or mark formation layer (see section *"Composing the mark formation laye*r"). Most preferably the addition amount can be from about 5% to about 10% w/w as total solid content in the dried coating film or mark formation layer. The addition amount can be selected to provide an optimized balance of performance factors which can include sensitivity, mark density, coating uniformity, as well as the stability of the liquid coating composition.

The average molecular weight and solubility of the compounds represented by formula I in a coating composition can be determined by the size and type of the substitution groups, R₁ and R₂ as well as the chain length n. Compounds with high solubility in solution of the liquid coating composition are preferred. In case of low solubility compounds, fine powder form with most popular particle-size below about 10 µm is preferred, and most preferably, below about 1 µm. In addition, preferred substitution groups, R₁ and R₂, and the chain length n can be selected based on the application and use of the coating composition; for example, aqueous based coatings or solvent based coatings may require varying organic compounds. Another factor that can be considered in the selection of preferred substitution groups and chain length is the type of color formation agents in the coating composition in order to allow maximum dispersion of these color forming agents in the coating composition. Based on the present disclosure, a person skilled in the art of laser markable coating compositions would be able to determine preferable selections of the substitution groups, R₁ and R₂, as well as the chain length n based on the other components of the coating composition.

In a specific embodiment based on the color forming system disclosed in WO 2006/052843 A2 and WO 2006/063165 A2, an exemplary organic compound represented by formula I has R₁ and R₂ independently selected from the group consisting ofH, alkyl of 1 to 5 carbons, and alkenyl of 2 to 5 carbons, and n in the range of from about 20 to about 1000. Most preferably the organic compound represented by formula I has R₁ and R₂ independently selected from the group consisting of H, alkyl of 1 to 5 carbons, and n in the range of from about 30 to about 500.

Examples of such organic laser sensitivity enhancement additives include, but are not limit to, polyethylene glycol compounds with a molecular weight in the range of from about 1,000 to about 20,000 and can be obtained commercially as such trade names as E1450, E4000, E6000, E8000, and E20000, and methoxypolyethylene glycol compounds with a molecular weight in the range of of from about 350 to about 5,000 and can be obtained commercially.

The inventive organic laser absorption sensitivity enhancement compounds can be incorporated into either the micro-encapsulated leuco-dye dispersion portion, the electron-acceptor developer dispersion portion, or both. Two or more of the inventive organic laser sensitivity enhancement additives be selected and combined to optimize their effect. Said compounds may also be combined and mixed with typical inorganic laser absorbing compounds disclosed in the prior art. These include, but are not limited to, such compounds as mica to optimize the laser sensitivity of the coated media.

Through use of inventive compounds of this invention, it has been found that from about a 10% to about a 40% increase in laser marking sensitivity may be obtained, depending on selection of the inventive compound as well as the addition amount. In the examples of this disclosure, about a 22% increase in marking speed is obtained by addition of methoxypolyethylene glycol 5000 at a level of about 5% of the dried coating composition. With the addition of such laser absorption sensitivity enhancement compounds, the coated film can also have an increased appearance of uniformity

### Other Additives

The other components in the coating composition for mark formation layer are not particularly limited and can be appropriately selected depending on necessity, and examples thereof include surfactants, melting agents, foam-suppressing agents, UV absorbing agents, antioxidants and free-radical scavenging agents. More detailed description and exemplary embodiments are disclosed in WO 2006/052843 A2.

### Composition for the mark formation layer

In order to obtain a coating composition for the mark formation layer of the present invention, the above components can be mixed uniformly and dispersed within a selected polymer media as binder. In this process, the mix ratio of the coating composition of the present invention is such that the ratio of total weight of electron donor dye precursors and that of the electron acceptor compounds is between from about 1:0.5 to about 1:30, preferably from about 1:1 to about 1:10.

The amount of the electron donor dye precursor in the said mark formation layer is preferably in the range of from about 0.1 to about-5.0 g/m². In this range, both a sufficient coloring density can be achieved and the transparency of the laser-sensitive recording layer can also be maintained. More preferably, the amount of the electron donor dye precursor is from about 1.0 to about 4.0 g/m².

In a preferred embodiment, multiple coating compositions can be formed wherein a first coating composition includes the electron donor dye precursor and the second coating composition includes the electron acceptor developer. Such first and second compositions can be maintained separately to improve stability of the compositions, and can be combined and/or mixed together prior to use. The organic absorption laser sensitivity enhancement compounds of this invention may be dissolved or uniformly dispersed in either of the above two portions, or both.

In the preparation of the laser sensitive mark formation layer, both the water-soluble polymer used as the protective colloid when preparing the electron donor dye precursor composition or its microcapsule composition and the water-soluble polymer used as the protective colloid when preparing the electron acceptor dispersion of this invention function as the binder of the mark formation layer. The same function may also be partially contributed by the addition of selected organic laser sensitizing compounds of this invention at an appropriate level and with proper selection of molecular weight.

Adding and mixing at least one additional binder separately from the above protective colloids is also possible. Preferably, water soluble polymers are generally used, and examples thereof include polyvinyl alcohol, hydroxyethyl cellulose, hydroxypropyl cellulose, epichlorohydrin-modified polyamide, ethylene-maleic anhydride copolymer, styrene-maleic anhydride copolymer, isobutylene-maleic salicylic anhydride copolymer, polyacrylic amide, methylol-modified polyacrylamide, casein and gelatin.

In order to impart water resistance to the binder, at least one water resisting agent may be added thereto, and an emulsion of a hydrophobic polymer, specifically a styrene-butadiene rubber latex, a styrene acrylic polymer, a acrylic or methacrylic series polymer or a copolymer and their derivative thereof, a polyester or a copolymer thereof, may be added thereto.

In order to safely and uniformly coat the mark formation layer, and to maintain the strength of the coated film, the mark formation layer of the present invention may further contain methyl cellulose, carboxymethyl cellulose, carboxyl-modified polyvinyl alcohol, polystyrene or a copolymer thereof, polyether, polyurethane resin or a derivative thereof, polyether based polyurethane copolymer, polyethylene or a copolymer thereof, epoxy resin, polyamide resin, polyvinyl butyral resin or starch compounds.

### B. Formation of the laser markable media

The laser-markable media of the present invention is preferably produced by the process described below, but it is not limited thereto.

The production process of a laser-markable media of the present invention includes the steps of: coating the primer layer (if it is used) onto the support, coating a mark formation layer onto the primer layer (if it is used) on the support. Depending on necessity, other layers, such as protective topcoat, may also be added.

The laser-markable media of the present invention may be coated sequentially with known coating methods, in the following order: the primer layer, the mark formation layer, and the protective topcoat. Examples of these coating methods include, but are not limit to, a blade coating method, an air knife coating method, a gravure or flexographic coating method, a roll coating method, a spray coating method, a dip coating method and a bar coating method.

### C. Laser marking equipment

The laser markable media of the present invention may be marked with a CO₂ laser having a wavelength of from 10.3 µm to 10.6 µm. A preferred laser marking system is one in which a Galvonometer beam steering technology that allows computer to control the beam with one or more rotating mirrors in X or X/Y-axes is used. Both Vector and Raster scanning schemes may be used depending on the application. Preferably the combination of laser beam quality, f- 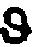 lens quality, and focal distance will allow the marking spot-size at the focal plane to be below about 300 µm, more preferably to be below about 100 µm.

By employing the laser-markable material, methods and systems of the current invention, various advantages can be realized such as, for example, low equipment and running cost; high-speed marking with fine line letters and simple patterns (vector scan); flexible resolution adjustment, tone control and pattern change (raster scan); relatively large and flexible marking area; and/or small-lot (short-run) high throughput production with variable information marking. Use of the laser-markable material, methods and systems of the current invention can enable laser marking on a wide variety of substrates, especially materials that do not typically respond or have a weak response to low-powered CO₂ lasers, or materials that can be easily damaged by the laser irradiation without forming quality marks. Example of such materials includes hard and soft plastics for engineering materials or polymer films for packaging of commercial goods (PET, BOPP, HDPE, PMMA, poly-carbonate and Nylons).

### EXAMPLES

### EXAMPLE 1 (comparison)

### [Preparation of liquid dispersion (A) containing an encapsulated electron donor dye precursors]

13.3 g of electron donor-type dye precursor (trade name: PSD-184, Nippon Soda) and 0.47 g of a UV light absorbing agent (trade name : Tinuvin P, Ciba Geigy Corp.) were added in 20 g of ethyl acetate and dissolved by heating up to 70°C, and then cooled down to 45°C. 12.6 g of capsule wall material (trade name : D-140N, Mitsui Takeda Chemical Co., Ltd.) was added into the ethyl acetate solution. The above ethyl acetate solution was added in 53 g of 6%w/w polyvinyl alcohol aqueous solution (trade name: Kurary Poval MP-217C, Kuraray Co., Ltd.) and emulsified with a homogenizer for 5 minutes. 80g of water and 0.75 g of tetraethylenepentamine were added and mixed with a stirrer at 60°C for 4 hours for encapsulation reaction.

After the reaction was completed, the particle size distribution of the encapsulated electron donor dye precursor particles was measured with a Beckman Coulter's LS-100Q particle size analyzer, the viscosity of the liquid coating composition was measured with a Brookfield Programmable DV-II+ viscometer with S21 small size spindle at 100-200 RPM, and the T_{g} of the microcapsule wall was measured by using a Perkin Elmez's Diamond DSC with a blank suspension without microcapsule as reference. The following results were obtained: viscosity of the liquid dispersion = 18 cps, wherein 99%, by volume, of the microcapsules have particle-size between 0.2-2 µm, and the microcapsule wall Tg = 156°C.

### [Preparation of liquid dispersion (B) containing an electron acceptor compound]

4.2g of an UV light absorbing agent (trade name: Tinuvin 328, Ciba Geigy), 1.0 g of tricresylphosphate, and 36.4g of an electron acceptor compound of Formula II 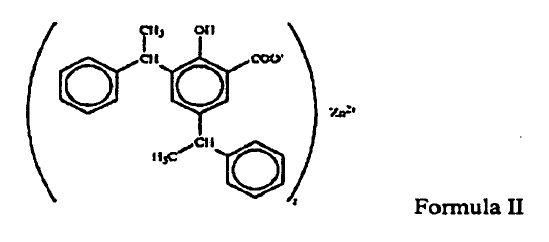 were added into 16.0g of ethyl acetate, and dissolved by heating to 70°C. The resulting ethyl acetate solution was added into the following aqueous solution and subsequently dispersed with a homogenizer for 5 minutes. The solution then was

heated to 70°C with agitation for approximately 2 hours until the ethyl acetate was evaporated. The final dispersion (B) has a particle size range between 0.3 to 2 µm (99% volume).

### Aqueous solution for emulsified dispersion (B)

| | |
|---|---|
| Water | 68.4g |
| 15%w/w Poly-vinylalcohol (trade name: Poval PVA205, Kuraray Co.,Ltd.) | 19.8g |
| 8%w/w Poly-vinylalcohol (trade name: Poval PVA217, Kuraray Co.,Ltd.) | 55.7g |
| Surfactant A, 2% solution C₁₂H₁₅SO₃Na | 11.2g |
| Surfactant B, 2% solution C₉H₁₉(C₆H₄)O(CH₂)₄SO₃Na | 11.2g |

### [Preparation of coating composition 1 for coating the mark formation layer]

The above dispersion (A) and dispersion (B) were mixed as follows.

| | |
|---|---|
| Water | 26% |
| Dispersion (A) | 16% |
| Dispersion (B) | 58% |
| Total coating composition 1 (comparison): | 100% |

### [Coating the mark formation layer onto a support film]

The above coating composition 1 was coated onto a 75 µm thick transparent OPP film using a draw-down wire bar coater, followed by 3 minutes of drying at 60°C.

### [Determine laser marking sensitivity of the above prepared media]

A Nutfield CodaFire-V10 10W CO₂ laser marker with an emitting wavelength of 10.6µm was used. The laser pumping frequency was set at 20KHz, and the "mark-speed" was set at 1000 mm/sec. A single straight line of about 5cm length was marked by increasing the "laser power%" from 10% and gradually up, until a very light and solid line became just visible to the eye on the media. The laser power% at this point was recorded as the "threshold laser dosage", and the actual laser power output at this setting was measured using an Ophir laser power meter (with a 30A-SH-V1 thermal sensor and AN/2E display). For this reference sample, the "threshold laser dosage" was measured to be 5.05 W.

### EXAMPLE 2 (exemplary aspect of invention)

The same dispersion (A) and dispersion (B) as above Example 1 were used to mix a coating composition 2 for coating the mark formation layer.

| | |
|---|---|
| Water | 25.1% |
| Polyethylene glycol E4000, commercially available from BASF | 0.9% |
| Dispersion (A) | 16% |
| Dispersion (B) | 58% |
| Total coating composition 2 (invention): | 100% |

The above coating composition 2 was coated onto the same substrate and under the same coating conditions as for coating composition 1, and laser marking sensitivity was measured using the same laser marker under the same marking conditions. The threshold laser dosage was determined in the same way as in Example 1. For this sample the actual laser power output at the threshold setting was measured to be 4.09W. The results show a 19% reduction in threshold power dosage when compared to the reference example.

### EXAMPLE 3 (exemplary aspect of invention)

The same dispersion (A) and dispersion (B) as above Example 1 were used to mix a coating composition 3 for coating the mark formation layer.

| | |
|---|---|
| Water | 25.1% |
| Methoxypolyethylene glycol, MW= 5000 | 0.9% |
| Dispersion (A) | 16% |
| Dispersion 5B) | 58% |
| Total coating composition 3 (invention): | 100% |

The above coating composition 3 was coated onto the same substrate and under the same coating conditions as used for coating composition 1, and laser marking sensitivity was measured using the same laser marker under the same marking conditions. The threshold laser dosage was determined in the same way as in Example 1. For this sample the actual laser power output at the threshold setting was measured to be 3.96W. The results show a 21.6% reduction in threshold power dosage when compared to the reference example.

### EXAMPLE 4 (comparison)

The same dispersion (A) and dispersion (B) as above Example 1 were used to mix a coating composition 4 for coating the mark formation layer.

| | |
|---|---|
| Water | 22.5% |
| Mica powder | 3.5% |
| Dispersion (A) | 16% |
| Dispersion (B) | 58% |
| Total coating composition 4 (comparison): | 100% |

The above coating composition 4 was coated onto the same substrate and under the same coating conditions as for coating composition 1, and laser marking sensitivity was measured using the same laser marker under the same marking conditions. The threshold laser dosage was determined in the same way as in Example 1. For this sample the actual laser power output at the threshold setting was measured to be 1.5W. However, observation during stability studies of the coating composition 4 show settling of solid with time. In addition, many areas of coating defects were visible in the coated media when observed under a microscope.

### EXAMPLE 5 (exemplary aspect of invention)

The same dispersion (A) and dispersion (B) as above Example 1 were used to mix a coating composition 5 for coating the mark formation layer.

| | |
|---|---|
| Water | 22.5% |
| Mica powder | 2.3% |
| Methoxypolyethylene glycol 5000 | 1.2% |
| Dispersion (A) | 16% |
| Dispersion (B) | 58% |
| Total coating composition 5 (invention): | 100% |

The above coating composition 5 was coated onto the same substrate and under the same coating conditions used for coating composition 1, and laser marking sensitivity was measured using the same laser marker under the same marking conditions. The results show a similar threshold power dosage as the coated media in Example 4. However, unlike coating composition 4, the observations during stability studies of the coating composition 5 show no signs of solid settling with time. In addition, the coated laser sensitive media in Example 5 show improved coating uniformity over the coated media of Example 4. Under a microscope, only minimal coating defects were observed on the coated media from Example 4.

## Claims

1. A coating composition for coating on a substrate to form a sensitive media suitable for color formation by exposure to a laser in the wavelength range of from 10.3 to 10.6 µm, the coating composition comprising:
(a) at least one organic compound which absorbs electromagnetic radiation in the wavelength range of from 10.3 to 10.6 µm and which generates sufficient energy to trigger a color formation reaction,
wherein the at least one organic compound has the following Formula I
Formula I: R₁(OCH₂CH₂)ₙOR₂
wherein R₁ and R₂ are independently selected from the group consisting of H, alkyl, alkenyl, aryl, and substituted or unsubstituted heteroaromatic, and n>10,
and
wherein the at least one organic compound of Formula I is present in an amount from 1 % to 20%, w/w as total solid content in the dried coating composition,
and
(b) at least one color forming agent which can form a human-visible mark upon a triggering reaction by the absorbed energy in the coated media
wherein said at least one color forming agent comprises at least one electron donor dye precursor, and
at least one electron acceptor compound which, when triggered by the absorbed energy in the coated media, reacts with the electron donor dye precursor upon contact to form a colored dye,
wherein the at least one electron donor dye precursor is encapsulated by at least one polymer material having a glass transition temperature of equal to or less than 250°C.

2. The coating composition of Claim 1, wherein in the at least one organic compound of Formula I, n is from 20 to 1000.

3. The coating composition of Claim 1, wherein in the at least one organic compound of Formula I, n is from 30 to 500.

4. The coating composition of Claim 1, wherein the at least one organic compound of Formula I is present in an amount from 5% to 10%, w/w as total solid content in the dried coating composition.

5. The coating composition of Claim 1, wherein the at least one electron donor dye precursor is encapsulated by at least one polymer material having a glass transition temperature from 150 to 190°C.

6. The coating composition of Claim 1, wherein R₁ and R₂ are independently selected from the group consisting of -H, -CH₃, -CH₂CH₃, or - CH(CH₃)₂ and n is from 20 to 1000, and
wherein the at least one electron donor dye precursor is encapsulated by at least one polymer material having a glass transition temperature of from 150 to 190°C.

7. The coating composition of Claim 1, further comprising mica.

8. A laser-markable media comprising at least one laser sensitive layer suitable for forming a human-visible mark upon irradiation with a laser in the wavelength range of from 10.3 to 10.6 µm, the at least one laser sensitive layer comprising the coating composition defined in claim 1.

9. The laser-markable media of Claim 8, wherein in the at least one organic compound of Formula I, n is from 20 to 1000.

10. The laser-markable media of Claim 8, wherein in the at least one organic compound of Formula I, n is from 30 to 500.

11. The laser-markable media of Claim 8, wherein the at least one laser sensitive layer comprises from 5% to 10% w/w of the at least one organic compound of Formula I in the dried laser sensitive layer.

12. The laser-markable media of Claim 8, wherein the at least one electron donor dye precursor is encapsulated by at least one polymer material having a glass transition temperature from 150 to 190°C.

13. The laser-markable media of Claim 8, wherein the at least one electron donor dye precursor and the at least one electron acceptor compound are separated from each other by either encapsulating the at least one electron donor dye precursor in a polymer having a glass transition temperature of less than or equal to 250°C or by dispersing the at least one electron donor dye precursor and the at least one electron acceptor compound into two sub-layers separated by a third polymer spacing sub-layer having a glass transition temperature or a melting point of equal to or less than 250 °C.

14. The laser-markable media of Claim 8, wherein the at least one laser sensitive layer forms a human-visible mark upon irradiation by a laser in the wavelength range of from 10.3 to 10.6 µm and a fluence of less than or equal to 5 J/cm².

15. The laser-markable media according to Claim 8, wherein R₁ and R₂ are independently selected from the group consisting of -H, -CH₃, -CH₂CH₃, and -CH(CH₃)₂, and n is from 20 to 1000, and
wherein the at least one electron donor dye precursor is encapsulated by a polymer material having a glass transition temperature in the range of 150 °C to 190 °C.

16. The laser-markable media of claim 8, wherein the at least one laser sensitive layer further comprises mica.

17. A method for forming a human-visible mark on the laser-markable media of claim 8, comprising irradiating the laser-markable media with a laser in the wavelength range of from 10.3 to 10.6 µm.

## Patentansprüche

1. Beschichtungszusammensetzung zur Beschichtung eines Substrats zur Bildung eines empfindlichen Mediums, das zur Farbbildung durch Aussetzen einem Laser im Wellenlängenbereich von 10,3 bis 10,6 µm geeignet ist, wobei die Beschichtung Folgendes umfasst:
(a) mindestens eine organische Verbindung, die elektromagnetische Strahlung im Wellenlängenbereich von 10,3 bis 10,6 µm absorbiert und die ausreichend Energie erzeugt, um eine Farbbildungsreaktion auszulösen,
wobei die mindestens eine organische Verbindung die folgende Formel I hat
Formula I: R₁(OCH₂CH₂)ₙOR₂
worin R₁ und R₂ unabhängig voneinander ausgewählt sind aus der Gruppe, bestehend aus H, Alkyl, Alkenyl, Aryl und substituiertem oder nichtsubstituiertem Heteroaromat und n>10 ist, und
worin die mindestens eine organische Verbindung gemäß Formel I in einer Menge von 1 Gewicht/Gewicht-% bis 20 Gewicht/Gewicht-% als Gesamtfeststoffanteil in der getrockneten Beschichtungszusammensetzung vorhanden ist, und
(b) mindestens ein Farbbildungsmittel, das nach Auslösung einer Reaktion durch die absorbierte Energie in dem beschichteten Medium eine für den Menschen sichtbare Markierung bilden kann
wobei das mindestens eine Farbbildungsmittel Folgendes umfasst
mindestens einen Elektronendonator-Farbstoffvorläufer, und mindestens eine Elektronenakzeptor-Verbindung, die bei Auslösung durch die absorbierte Energie in dem beschichteten Medium bei Kontakt mit dem Elektronendonator-Farbstoffvorläufer reagiert,
wobei der mindestens eine Elektronendonator-Farbstoffvorläufer von mindestens einem Polymermaterial eingekapselt ist, das eine Glasübergangstemperatur von gleich oder weniger als 250 °C aufweist.

2. Beschichtungszusammensetzung nach Anspruch 1, wobei in der mindestens einen organischen Verbindung gemäß Formel I n von 20 bis 1000 ist.

3. Beschichtungszusammensetzung nach Anspruch 1, wobei in der mindestens einen organischen Verbindung gemäß Formel I n von 30 bis 500 ist.

4. Beschichtungszusammensetzung nach Anspruch 1, wobei die mindestens eine organische Verbindung gemäß Formel I in einer Menge von 5 Gewicht/Gewicht-% bis 10 Gewicht/Gewicht-% als Gesamtfeststoffanteil in der getrockneten Beschichtungszusammensetzung vorhanden ist.

5. Beschichtungszusammensetzung nach Anspruch 1, wobei der mindestens eine Elektronendonator-Farbstoffvorläufer von mindestens einem Polymermaterial eingekapselt ist, das eine Glasübergangstemperatur von 150 bis 190 °C aufweist.

6. Beschichtungszusammensetzung nach Anspruch 1, worin R₁ und R₂ unabhängig voneinander ausgewählt sind aus der Gruppe, bestehend aus -H, -CH₃, -CH₂CH₃, oder-CH(CH₃)₂ und n von 20 bis 1000 ist, und
wobei der mindestens eine Elektronendonator-Farbstoffvorläufer von mindestens einem Polymermaterial eingekapselt ist, das eine Glasübergangstemperatur von 150 bis 190 °C aufweist.

7. Beschichtungszusammensetzung nach Anspruch 1, ferner umfassend Glimmer.

8. Lasermarkierbares Medium, das mindestens eine laserempfindliche Schicht umfasst, die nach Bestrahlung mit einem Laser im Wellenlängenbereich von 10,3 bis 10,6 µm zum Bilden einer für den Menschen sichtbaren Markierung geeignet ist, wobei die mindestens eine laserempfindliche Schicht die Beschichtungszusammensetzung nach Anspruch 1 umfasst.

9. Lasermarkierbares Medium nach Anspruch 8, wobei in der mindestens einen organischen Verbindung gemäß Formel In von 20 bis 1000 ist.

10. Lasermarkierbares Medium nach Anspruch 8, wobei in der mindestens einen organischen Verbindung gemäß Formel In von 30 bis 500 ist.

11. Lasermarkierbares Medium nach Anspruch 8, wobei die mindestens eine laserempfindliche Schicht von 5 Gewicht/Gewicht-% bis 10 Gewicht/Gewicht-% der mindestens einen organischen Verbindung gemäß Formel I in der getrockneten laserempfindlichen Schicht umfasst.

12. Lasermarkierbares Medium nach Anspruch 8, wobei der mindestens eine Elektronendonator-Farbstoffvorläufer von mindestens einem Polymermaterial eingekapselt ist, das eine Glasübergangstemperatur von 150 bis 190 °C aufweist.

13. Lasermarkierbares Medium nach Anspruch 8, wobei der mindestens eine Elektronendonator-Farbstoffvorläufer und die mindestens eine Elektronenakzeptor-Verbindung entweder durch Einkapseln des mindestens einen Elektronendonator-Farbstoffvorläufers in einem Polymer mit einer Glasübergangstemperatur von weniger als oder gleich 250 °C oder durch Dispergieren des mindestens einen Elektronendonator-Farbstoffvorläufers und der mindestens einen Elektronenakzeptor-Verbindung in zwei Unterschichten voneinander getrennt werden, die durch eine dritte, Polymerbeabstandungs-Unterschicht getrennt sind, die eine Glasübergangstemperatur oder einen Schmelzpunkt von gleich oder weniger als 250°C aufweist.

14. Lasermarkierbares Medium nach Anspruch 8, wobei die mindestens eine laserempfindliche Schicht nach Bestrahlung durch einen Laser im Wellenlängenbereich von 10,3 bis 10,9 µm und einer Fluenz von weniger als oder gleich 5 J/cm² eine für den Menschen sichtbare Markierung bildet.

15. Lasermarkierbares Medium nach Anspruch 8, worin R₁ und R₂ unabhängig voneinander ausgewählt sind aus der Gruppe, bestehend aus -H, -CH₃, -CH₂CH₃ und -CH(CH₃)₂ und n von 20 bis 1000 ist, und
wobei der mindestens eine Elektronendonator-Farbstoffvorläufer von mindestens einem Polymermaterial eingekapselt ist, das eine Glasübergangstemperatur im Bereich von 150 bis 190 °C aufweist.

16. Lasermarkierbares Medium nach Anspruch 8, wobei die mindestens eine laserempfindliche Schicht ferner Glimmer umfasst.

17. Verfahren zum Bilden einer für den Menschen sichtbaren Markierung auf dem lasermarkierbaren Medium nach Anspruch 8, umfassend das Bestrahlen des lasermarkierbaren Mediums mit einem Laser im Wellenlängenbereich von 10,3 bis 10,6 µm.

## Revendications

1. Composition de revêtement à enduire sur un substrat pour former un support sensible approprié pour la formation de couleur par exposition à un laser dans la plage de longueur d'onde allant de 10,3 à 10,6 µm, la composition de revêtement comprenant :
(a) au moins un composé organique qui absorbe un rayonnement électromagnétique dans la plage de longueur d'onde allant de 10,3 à 10,6 µm et qui produit suffisamment d'énergie pour déclencher une réaction chromogène,
le ou les composés organiques ayant la formule I suivante
Formula I: R₁(OCH₂CH₂)ₙOR₂
dans laquelle R₁ et R₂ sont indépendamment choisis dans le groupe constitué par H, un groupe alkyle, un groupe alcényle, un groupe aryle et un composé hétéroaromatique substitué ou non substitué, et n > 10, et
le ou les composés organiques de formule I étant présents à raison de 1 % à 20 % en poids en tant que teneur solide totale dans la composition de revêtement sèche,
et
(b) au moins un agent chromogène qui peut former une marque visible par l'être humain lors d'une réaction d'activation par l'énergie absorbée dans le support enduit
ledit ou lesdits agents chromogènes comprenant au moins un précurseur de colorant donneur d'électrons, et
au moins un composé accepteur d'électrons qui, lorsqu'il est activé par l'énergie absorbée dans le support enduit, réagit avec le précurseur de colorant donneur d'électrons par contact pour former un colorant coloré,
le ou les précurseurs de colorant donneurs d'électrons étant encapsulés par au moins un matériau polymère possédant une température de transition vitreuse inférieure ou égale à 250 °C.

2. Composition de revêtement selon la revendication 1, dans laquelle dans le ou les composés organiques de formule 1, n vaut de 20 à 1000.

3. Composition de revêtement selon la revendication 1, dans laquelle dans le ou les composés organiques de formule 1, n vaut de 30 à 500.

4. Composition de revêtement selon la revendication 1, dans laquelle le ou les composés organiques de formule I sont présents à raison de 5 % à 10 % m/m en tant que teneur solide totale dans la composition de revêtement sèche.

5. Composition de revêtement selon la revendication 1, dans laquelle le ou les précurseurs de colorant donneurs d'électrons sont encapsulés par au moins un matériau polymère possédant une température de transition vitreuse comprise dans la plage allant de 150 à 190 °C.

6. Composition de revêtement selon la revendication 1, dans laquelle R₁ et R₂ sont indépendamment choisis dans le groupe constitué par -H, - CH₃, -CH₂CH₃ ou -CH(CH₃)₂ et n vaut de 20 à 1000, et
dans laquelle le ou les précurseurs de colorant donneurs d'électrons sont encapsulés par au moins un matériau polymère possédant une température de transition vitreuse comprise dans la plage allant de 150 à 190 °C.

7. Composition de revêtement selon la revendication 1, comprenant en outre du mica.

8. Support marquable par laser comprenant au moins une couche sensible au laser appropriée pour la formation d'une marque visible par l'être humain lors d'une irradiation avec un laser dans la plage de longueur d'onde allant de 10,3 à 10,6 µm, la ou les couches sensibles au laser comprenant la composition de revêtement définie dans la revendication 1.

9. Support marquable par laser selon la revendication 8, dans lequel dans le ou les composés organiques de formule I, n vaut de 20 à 1000.

10. Support marquable par laser selon la revendication 8, dans lequel dans le ou les composés organiques de formule 1, n vaut de 30 à 500.

11. Support marquable par laser selon la revendication 8, dans lequel la ou les couches sensibles au laser comprennent de 5 % à 10 % m/m d'au moins un composé organique de Formule I dans la couche sensible au laser sèche.

12. Support marquable par laser selon la revendication 8, dans lequel le ou les précurseurs de colorant donneurs d'électrons sont encapsulés par au moins un matériau polymère possédant une température de transition vitreuse comprise dans la plage allant de 150 à 190 °C.

13. Support marquable par laser selon la revendication 8, dans lequel le ou les précurseurs de colorant donneurs d'électrons et le ou les composés accepteurs d'électrons sont séparés les uns des autres par encapsulation du ou des précurseurs de colorant donneurs d'électrons dans un polymère possédant une température de transition vitreuse inférieure ou égale à 250 °C ou par dispersion du ou des précurseurs de colorant donneurs d'électrons et du ou des composés accepteurs d'électrons dans deux sous-couches séparées par une troisième sous-couche d'espacement polymère possédant une température de transition vitreuse ou un point de fusion inférieur(e) ou égal(e) à 250 °C.

14. Support marquable par laser selon la revendication 8, dans lequel la ou les couches sensibles au laser forment une marque visible par l'être humain lors d'une irradiation avec un laser dans la plage de longueur d'onde allant de 10,3 à 10,6 µm et une fluence inférieure ou égale à 5 J/cm²_{.}

15. Support marquable par laser selon la revendication 8, dans lequel R₁ et R₂ sont indépendamment choisis dans le groupe constitué par -H, - CH₃, -CH₂CH₃ ou -CH(CH₃)₂ et n vaut de 20 à 1000, et
dans lequel le ou les précurseurs de colorant donneurs d'électrons sont encapsulés par au moins un matériau polymère possédant une température de transition vitreuse comprise dans la plage allant de 150 à 190 °C.

16. Support marquable par laser selon la revendication 8, dans lequel la ou les couches sensibles au laser comprennent en outre du mica.

17. Procédé de formation d'une marque visible par l'être humain sur le support marquable par laser selon la revendication 8, comprenant l'irradiation du support marquable par laser avec un laser dans la plage de longueur d'onde allant de 10,3 à 10,6 µm.
